# EUROPEAN PATENT APPLICATION

(11) **EP 3 739 535 A1**
(43) Date of publication of application: **18.11.2020**
(21) Application number: 19803022.3
(22) Date of filing: 11.04.2019
(51) Int. Cl.: G06Q 20/12, G06Q 30/06

(54) **PAYMENT METHOD, APPARATUS, RELATED DEVICE, AND SYSTEM**

(30) Priority: 15.05.2018 CN 201810463712
(71) Applicant: Tencent Technology (Shenzhen) Company Limited, Shenzhen City, Guangdong 518057 (CN)
(72) Inventor: BAO, Dongpo, Shenzhen, Guangdong 518057 (CN); WANG, Songjian, Shenzhen, Guangdong 518057 (CN); DENG, Jianwei, Shenzhen, Guangdong 518057 (CN); WU, Ruizhou, Shenzhen, Guangdong 518057 (CN); ZENG, Dan, Shenzhen, Guangdong 518057 (CN); FEI, Qiang, Shenzhen, Guangdong 518057 (CN); CHEN, Ningguo, Shenzhen, Guangdong 518057 (CN)
(74) Representative: Eisenführ Speiser
(86) International application number: PCT/CN2019/082281
(87) International publication number: WO 2019/218817

(57) **Abstract**

A payment method, an apparatus, a related device, and a system. A payment method executed by a processing server comprises: determining a payment order that is bound to a merchant order generated by a merchant device (S14), the merchant order corresponding to a virtual value-added service which a user equipment requests to purchase; acquiring a payment certificate of the payment order (S18); according to the payment certificate, matching the merchant order bound to the payment order (S 19); according to the matched merchant order, sending to the merchant device a service provision notification for providing a corresponding virtual value-added service for the user equipment (S20). The described method may be implemented in an application and support payment for virtual value-added services provided by a plurality of merchants.

## Description

### RELATED APPLICATION

The application claims priority to China Patent Application No. 2018104637125, filed with the China National Intellectual Property Agency on May 15, 2018 and entitled "PAYMENT METHOD AND APPARATUS, RELATED DEVICE, AND SYSTEM", which is incorporated herein by reference in its entirety.

### FIELD OF THE TECHNOLOGY

The present disclosure relates to the technical field of data processing, and in particular, to a payment method, a payment apparatus, a related device, and a system.

### BACKGROUND OF THE DISCLOSURE

Currently, when a user purchases a virtual value-added service, a payment channel is required to implement the purchase. Typically, when a user purchases a virtual value-added service in an application, a payment channel provided by a mobile operating system may be applied to implement the purchase. For example, the purchase is implemented via an In APP Purchase (IAP) payment channel launched by the iOS (a mobile operating system developed by the Apple Inc.), or a Google Wallet (GW) payment channel launched by Android. These payment channels may be considered as in-app payment channels, and are mainly configured to support payment for purchasing a virtual value-added service in an application.

With the rise of platform-level applications, an application is accessed by an increasing number of merchants that provide virtual value-added services. An urgent problem to be resolved is how to implement payment support for virtual value-added services that are provided by multiple merchants accessing one application.

### SUMMARY

In view of the above, a payment method, a payment apparatus, a related device, and a system are provided according to embodiments of the present disclosure, to implement payment support for virtual value-added services that are provided by multiple merchants in one application.

To achieve the above objective, following technical solutions are provided according to embodiments of the present disclosure.

A payment method is provided according to an embodiment of the present disclosure, including: determining, by a processing server, a payment order that is bound with a merchant order, where the merchant order is generated by a merchant device, and corresponds to a virtual value-added service that a user device requests to purchase; obtaining, by the processing server, a payment voucher for the payment order; matching, by the processing server, the merchant order that is bound with the payment order, to the payment voucher; and transmitting, by the processing server, a service providing notification to the merchant device according to the matched merchant order, where the service providing notification indicates providing the virtual value-added service for the user device.

A payment method is further provided according to an embodiment of the present disclosure, including: generating, by a merchant device, a merchant order corresponding to a virtual value-added service that a user device requests to purchase; transmitting, by the merchant device, a payment-order generation request to a processing server, where the payment-order generation request is configured to request the processing server to generate a payment order that is bound with the merchant order; receiving a service providing notification by the merchant device, where the service providing notification is transmitted by the processing server after the processing server obtains a payment voucher corresponding to the payment order and matches the merchant order that is bound with the payment order to the payment voucher; and providing, by the merchant device, the virtual value-added service corresponding to the matched merchant order for the user device, according to the service providing notification.

A payment method is further provided according to an embodiment of the present disclosure, including: obtaining, by a user device, a payment pulling-up notification that is transmitted by a processing server and indicates at least a payment order, where the payment order is bound with a merchant order generated by a merchant device, and the merchant order corresponds to a virtual value-added service that the user device requests to purchase; transmitting, by the user device, a payment voucher corresponding to the payment order to the processing server; and obtaining a virtual value-added service by the user device, where the virtual value-added service is provided by the merchant device after the processing server matches the merchant order bound with the payment order to the payment voucher and instructs the merchant device to provide the virtual value-added service corresponding to the matched merchant order.

A payment apparatus applied to a processing server is further provided according to an embodiment of the present disclosure, including: a payment order determining module, configured to determine a payment order that is bound with a merchant order, where the merchant order is generated by a merchant device and corresponds to a virtual value-added service that a user device requests to purchase; a payment voucher obtaining module, configured to obtain a payment voucher for the payment order; a merchant order matching module, configured to match the merchant order that is bound with the payment order, to the payment voucher; and a service providing notification module, configured to transmit a service providing notification to the merchant device according to the matched merchant order, where the service providing notification indicates providing the virtual value-added service for the user device.

A processing server is further provided according to an embodiment of the present disclosure, including: at least one memory and at least one processing chip, where the memory stores a program, and the processing chip invokes the program to implement the foregoing payment method that is performed by the processing server.

A payment apparatus applied to a merchant device is further provided according to an embodiment of the present disclosure, including: a merchant order generation module, configured to generate a merchant order corresponding to a virtual value-added service that a user device requests to purchase; a payment-order generation request module, configured to transmit a payment-order generation request to a processing server, where the payment-order generation request is configured to request the processing server to generate a payment order that is bound with the merchant order; a service providing notification receiving module, configured to receive a service providing notification, which is transmitted by the processing server after the processing server obtains a payment voucher corresponding to the payment order and matches the merchant order that is bound with the payment order to the payment voucher; and a service providing module, configured to provide the virtual value-added service corresponding to the matched merchant order for the user device, according to the service providing notification.

A merchant device is further provided according to an embodiment of the present disclosure, including: at least one memory and at least one processing chip, where the memory stores a program, and the processing chip invokes the program to implement the foregoing payment method that is performed by the merchant device.

A payment apparatus applied to a user device is further provided according to an embodiment of the present disclosure, including: a payment pulling-up notification obtaining module, configured to obtain a payment pulling-up notification that is transmitted by a processing server and indicates at least a payment order, where the payment order is bound with a merchant order generated by a merchant device, and the merchant order corresponds to a virtual value-added service that the user device requests to purchase; a payment voucher transmitting module, configured to transmit a payment voucher corresponding to the payment order to the processing server; and a service obtaining module, configured to obtain a virtual value-added service, which is provided by the merchant device after the processing server matches the merchant order that is bound with the payment order to the payment voucher and instructs the merchant device to provide the virtual value-added service corresponding to the matched merchant order.

A user device is further provided according to an embodiment of the present disclosure, including: at least one memory and at least one processing chip, where the memory stores a program, and the processing chip invokes the program to implement the foregoing payment method that is performed by the user device.

A storage medium is further provided according to an embodiment of the present disclosure, where the storage medium stores a program, and the program is executable by a processing chip to implement the foregoing payment method performed by the processing server, the foregoing payment method performed by the merchant device, or the foregoing payment method performed by the user device.

A payment system is further provided according to an embodiment of the present disclosure, including: the foregoing processing server, the foregoing merchant device, and the foregoing the user device.

Based on the foregoing technical solutions, the merchant device may generate the merchant order corresponding to the virtual value-added service, and the processing server determines the payment order that is applicable to a payment channel and bound with the merchant order, in a case that the user device purchases the virtual value-added service. Hence, after the user device pays for the payment order and purchases the virtual value-added service, the processing server may find the bound merchant order based on the payment order for which the user device pays, and instruct the merchant device accurately of the merchant order providing such service. Thereby, the virtual value-added service purchased by the user device is accurately provided after the user device completes the payment.

In embodiments of the present disclosure, a payment behavior of a user and the virtual value-added service that is actually purchased can be associated with each other via binding the payment order with the merchant order. Therefore, in a case there are multiple merchants in one application, the user may search for the bound merchant order via the payment order, so as to query a purchased order (that is, the merchant order) for the virtual value-added service. Payment support is achieved in one application, for virtual value-added services provided by the multiple merchants.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is an optional block diagram of a structure of a payment system according to an embodiment of the present disclosure;
Figure 2 is a chart of a signaling process of a payment method according to an embodiment of the present disclosure;
Figure 3 is a schematic diagram of a relationship between an item ID and a transaction price;
Figure 4 is a schematic process of payment presented on a user device;
Figure 5 is another chart of a signaling process of a payment method according to an embodiment of the present disclosure;
Figure 6a is a first schematic diagram of an order status of a merchant order;
Figure 6b is a second schematic diagram of an order status of a merchant order;
Figure 7 is an optional flowchart of a payment method according to an embodiment of the present disclosure;
Figure 8 is a schematic diagram of marking a status of a merchant order;
Figure 9 is a schematic diagram of a payment method in a mini-app scenario;
Figure 10 is a block diagram of a structure of a payment apparatus according to an embodiment of the present disclosure;
Figure 11 is another block diagram of a structure of a payment apparatus according to an embodiment of the present disclosure;
Figure 12 is another block diagram of a structure of a payment apparatus according to an embodiment of the present disclosure;
Figure 13 is another block diagram of a structure of a payment apparatus according to an embodiment of the present disclosure;
Figure 14 is a block diagram of a hardware structure of a processing server according to an embodiment of the present disclosure;
Figure 15 is another block diagram of a structure of a payment apparatus according to an embodiment of the present disclosure;
Figure 16 is another block diagram of a structure of a payment apparatus according to an embodiment of the present disclosure;
Figure 17 is another block diagram of a structure of a payment apparatus according to an embodiment of the present disclosure; and
Figure 18 is another block diagram of a structure of a payment apparatus according to an embodiment of the present disclosure.

### DESCRIPTION OF EMBODIMENTS

When a user purchases a virtual value-added service in an application, a conventional payment method is mainly implemented as follows. Each payment channel is provided an item management system of its own (for example, IAP, GW, and other in-app payment channels are provided with their own item management systems). Thereby, it is necessary to construct a payment order applicable to a payment channel (for example, in-app payment orders for IAP, GW, and other in-app payment channels), according to a requirement of such payment channel. Optionally, an application needs to virtualize a virtual value-added service provided by a merchant into an item identifier (ID), and register the item ID on a payment channel server. Hence, when a user purchases a virtual value-added service according to a conventional payment method, the user may pull up a payment channel to communicate with the payment channel server, and pay for a payment order corresponding to the item ID, so as to purchase the virtual value-added service. After paying for the payment order, the user may obtain a payment voucher, and notify the merchant of providing the virtual value-added service accordingly.

The payment channel server is a server for a payment channel, for example, a server for an IAP payment channel, or a server for a GW payment channel. The payment channel server is mainly implemented as a server corresponding to the payment channel.

In a conventional payment method, an application virtualizes a value-added service provided by a merchant into an item ID and constructs a payment order to meet a payment requirement of users, which is mainly based on an account of the application on the payment channel server (for example, when a social application requires that a paid subscription service of a merchant goes online based on the IAP payment, staff of the social application needs to virtualize the paid subscription service of the merchant into an item ID and register the item ID on the IAP payment channel server, through an account registered by the social application on an IAP payment channel server). A basic requirement on payment may be satisfied in a case that there is only one merchant in the application. In a case that multiple merchants provide virtual value-added services in the application, there are at least following problems in the conventional payment method.

In the conventional payment method, the item ID is registered mainly based on the account of the application on the payment channel server. Binding of a virtual value-added service order is not supported, and a payment behavior of a user is separated from the actual virtual value-added service order. Therefore, in the case that there are multiple merchants in the application, a user cannot query the virtual value-added service order through the obtained payment voucher.

Hence, the conventional payment solution cannot provide payment support effectively for the virtual value-added services that are provided by multiple merchants accessing the application.

In order to address the above defect, architecture of a payment system and payment logic are adjusted according to embodiments of the present disclosure. Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

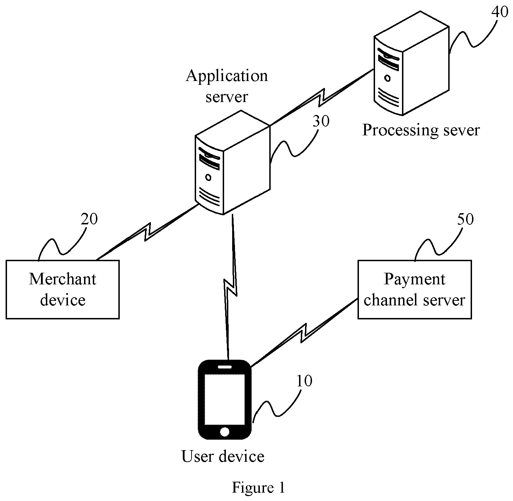

Figure 1 is an optional block diagram of a structure of a payment system according to an embodiment of the present disclosure. As shown in Figure 1, the payment system may include a user device 10, a merchant device 20, an application server 30, a processing server 40, and a payment channel server 50.

The user device may be electronic equipment used by a user who purchases a virtual value-added service, for example, a smartphone, a tablet computer, or another user terminal.

The merchant device may be electronic equipment corresponding to a merchant providing a virtual value-added service, and may be implemented as a merchant terminal or a merchant server.

The application server is service equipment corresponding to a platform-level application. The application server is mainly configured to provide an application service for a user (for example, a social application server provides a social service for a user, and an e-commerce server provides an e-commerce service for a user), and support expansion and extension of different service functions (for example, a social application server can further provide a we-media service and a mini-app service through expansion and extension, besides the social application service). In an embodiment of the present disclosure, a merchant may access the application server to provide a virtual value-added service in an application.

The user device and the merchant device may install an application through an installation package of the application. Thereby, the user device and the merchant device may interact with the application server through the installed application.

The processing server is a set of service equipment that is connected within the application server, and is configured to implement a payment method according to an embodiment of the present disclosure. In an optional embodiment, the processing server may be service equipment connected to the application server. The application may server as a bridge in communications between the processing server and the user device, and between the processing server and the merchant device. That is, the application server may serve as a relay in communications between the processing server and the user device, and in communications between the processing server and the merchant device.

The payment channel server is service equipment corresponding to a payment channel. For example, the payment channel server in an Android operating system may be a GW payment channel server corresponding to the GW payment channel launched by the Android, and the payment channel server in an iOS operating system may be an IAP payment channel server corresponding to the IAP payment channel launched by the iOS.

Figure 1 is only optional system architecture. In another optional embodiment, the processing server may serve as an additional service function of the application server. That is, hereinafter steps performed by the processing server may be regarded as an implementation of the additional service function in the application server.

For better understanding of an application background of embodiments of the present disclosure, hereinafter some examples in which a merchant provides a virtual value-added service in an application are provided based on the above in-app payment system, before introducing the payment method according to embodiments of the present disclosure. In these examples, a user loads a service page of a merchant mainly through an application, and purchases a virtual value-added service that is provided on the service page.

A social application is taken as an example. A we-media account (such as an official account) in the social application may serve as a merchant and provide a virtual value-added service, such as a paid subscription, to a user. The user may purchase subscription services provided by different merchants, through a payment solution according to an embodiment of the present disclosure.

In another example, the social application may provide a function of loading different programs as extension. Optionally, after creating a program, a program creator may provide in the program a virtual value-added service, such as paid content and a top-up service, and may publish a link QR code or a link address of the program. In a case that the user scans the link QR code or accesses the link address through the social application, the social application loads a corresponding page as a program page. The user may purchase the virtual value-added service, such as the paid content and the top-up service, provided on the program page, through a payment solution according to an embodiment of the present disclosure.

Optionally, the function of loading different programs provided by the social application as extension may be a mini-app function in WeChat, as a typical example. A mini-app is a program that can be used without download and installation, and the user may scan a QR code of the mini-app or search for the mini-app through WeChat, to load a corresponding mini-app page in WeChat.

A pay-for-knowledge application is taken as another example. A registered user may sell professional knowledge in the pay-for-knowledge application, and become a merchant. A user may purchase the professional knowledge of different merchants through a payment solution according to an embodiment of the present disclosure.

It can be seen from the aforementioned examples, an objective of embodiments of the present disclosure is providing payment support in an application when there are multiple merchants providing virtual value-added services (for example, multiple we-media accounts providing virtual value-added services, merchants of different mini-apps, different merchants selling professional knowledge, and the like) in the application.

It is noted that the user and the merchant may not be strictly separated in roles. In some cases, a role of a person may be switched between the user and the merchant. For example, an owner of a we-media account may serve as a merchant who provides paid subscription or another virtual value-added service to users, and may also be a user who pays for a virtual value-added service provided by another we-media account.

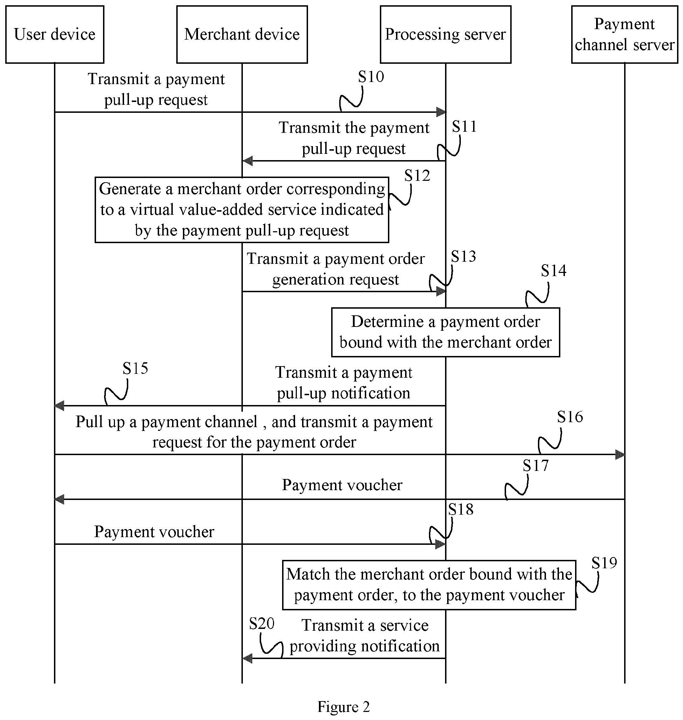

Based on the foregoing introduction, hereinafter the payment method according to an embodiment of the present disclosure is described. As an optional embodiment, Figure 2 shows a signaling process of a payment method according to an embodiment of the present disclosure. Referring to Figure 2, the process may include the steps S10 to S20.

In step S 10, a user device transmits a payment pulling-up request to a processing server. The payment pulling-up request indicates at least a virtual value-added service that the user device requests to purchase.

In an optional embodiment, the user device may transmit the payment pulling-up request to the processing server via an application server.

In an optional embodiment, after the user device accesses a service page of a merchant through an application (for example, the user device accesses an mini-app page of a merchant through a social application), the service page may provide at least one payment pulling-up entry for a virtual value-added service provided by the merchant. One payment pulling-up entry may correspond to one virtual value-added service.

In an optional embodiment, the user device accessing the service page of the merchant through the application may be implemented as follows in a mini-app scenario. The user device scans a link QR code on a program page of the merchant through the application, or accesses a link address on a program page of the merchant through the application, to load the program page of the merchant. The loaded program page provides at least one payment pulling-up entry for a virtual value-added service provided by the merchant.

When the user taps the payment pulling-up entry for the virtual value-added service, it may be considered that the user selects a to-be-purchased virtual value-added service, and requests pulling up the payment for the virtual value-added service. Thereby, the user device may construct a corresponding payment pulling-up request based on the payment pulling-up entry that is tapped by the user, and the payment pulling-up request indicates at least the virtual value-added service.

The user taps the payment pulling-up entry for the virtual value-added service on the service page of the merchant, to request pulling up the payment for the virtual value-added service.

In step S 11, the processing server transmits the payment pulling-up request to a merchant device.

The processing server may forward the payment pulling-up request to the merchant device corresponding to the service page accessed by the user.

In an optional embodiment, the processing server may transmit the payment pulling-up request to the merchant device via the application server.

In an optional embodiment, the payment pulling-up request may carry a merchant identifier, and the processing server may transmit the payment pulling-up request to a merchant device corresponding to the merchant identifier. The service page of the merchant may be associated with the corresponding merchant identifier. In a case that the user device accesses the service page of the merchant through an application, the payment pulling-up request may be transmitted to a merchant device corresponding to the merchant identifier according to the merchant identifier associated with the service page accessed by the user device.

In an optional embodiment, the processing server may set a commodity identifier corresponding to each merchant. The processing server may determine a merchant corresponding to the commodity identifier, according to the commodity identifier (where one commodity identifier may identify one virtual value-added service uniquely) carried in the payment pulling-up request, and transmit the payment pulling-up request to a merchant device corresponding to the determined merchant.

In step S 12, the merchant device generates a merchant order corresponding to the virtual value-added service, according to the payment pulling-up request.

In an embodiment of the present disclosure, after the user device requests pulling up the payment for the virtual value-added service, a corresponding payment order is not directly constructed, and the payment is not directly performed by the user device based on the payment order. In an embodiment of the present disclosure, the added processing server is required to notify the merchant device of that the user device pulls up the payment for the virtual value-added service, and thereby the merchant device generates the self-manageable merchant order corresponding to the virtual value-added service.

In an optional embodiment, the payment pulling-up request may carry at least a commodity identifier corresponding to the virtual value-added service, and the merchant device may construct a merchant order corresponding to the commodity identifier.

The virtual value-added service may be regarded as a virtual commodity, and hence may be identified by the commodity identifier. One commodity identifier may identify one virtual value-added service uniquely.

In step S 13, the merchant device transmits a payment-order generation request to the processing server.

The payment-order generation request is configured to request the processing server to generate a corresponding payment order, so that the user device may subsequently pay for the virtual value-added service based on the payment order.

In an optional embodiment, the merchant device may transmit the payment-order generation request to the processing server via the application server.

In step S 14, the processing server determines a payment order that is bound with the merchant order.

Each payment channel such as IAP or GW is provided with an item management system of its own, and payment for the virtual value-added service through the payment channel is implemented by paying for an item ID registered on a payment channel server. Therefore, after constructing the self-manageable merchant order, the merchant device further transmits the payment-order generation request to the processing server, in order to request the processing server to generate a payment order applicable to the payment channel, such as IAP or GW.

In an optional embodiment, the processing server may determine the corresponding item ID, to determine the payment order.

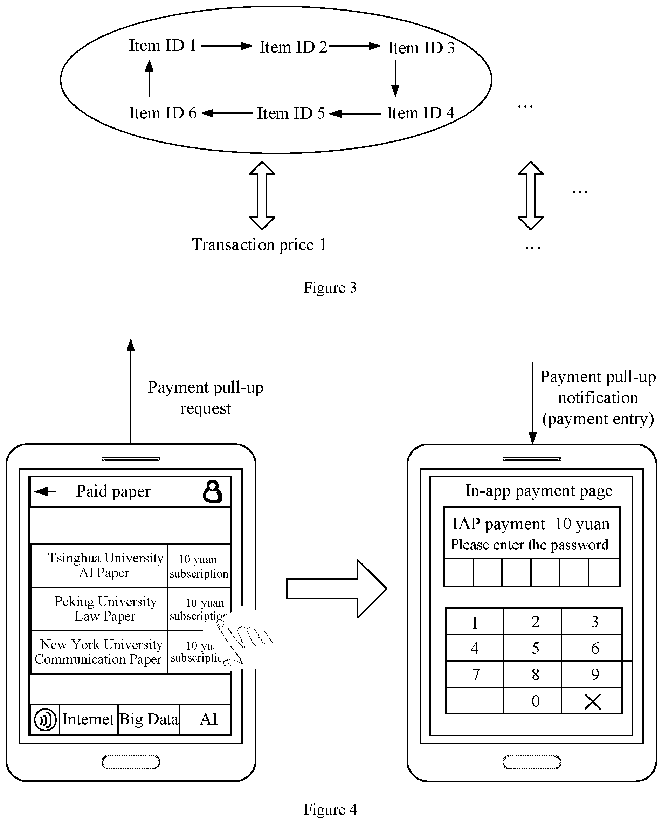

In an optional embodiment, the item ID may correspond to a transaction price. Reference may be made to Figure 3, which is a schematic diagram of an optional relationship between an item ID and a transaction price. As shown in Figure 3, one transaction price may correspond to multiple item IDs, and the multiple item IDs are sequentially used in turn. That is, the multiple item IDs corresponds the transaction price in a polling manner. As shown in Figure 3, it is assumed that transaction price 1 corresponds to six item IDs. When the user device requests pulling up payment of a virtual value-added service under the transaction price 1 consecutively for multiple times, item ID 1 may be used in a case that the payment is pulled up under the transaction price 1 for the first time, item ID2 may be used in a case that the payment is pulled up under the transaction price 1 for the second time, and so on. As a loop, the item ID 1 may be used again in a case that the payment is pulled up under the transaction price 1 for the seventh time (that is, the item ID for the first time is repeated at the seventh time).

The relationship between the transaction price and the item ID shown in Figure 3 is only optional. In practice, such relationship may be adjusted for a different payment channel. For example, each time a transaction price is used, the transaction price corresponds to a unique item ID.

In an optional embodiment of the present disclosure, the processing server may determine an item ID corresponding to the transaction price at least based on the transaction price of the merchant order, and bind the item ID to the merchant order, so as to implement determining the payment order bound with the merchant order.

The steps S 10 to S 14 are only an optional implementation for: determining, by a processing server, a payment order that is bound with a merchant order, where the merchant order is generated by a merchant device, and corresponds to a virtual value-added service that a user device requests to purchase.

In the steps S10 to S14, the processing server is mainly configured to transmit the payment pulling-up request of the user device to the merchant device. The payment pulling-up request indicates at least the virtual value-added service that the user device requests to purchase. Thereby, after the merchant device generates the merchant order corresponding to the virtual value-added service, the processing server obtains the payment-order generation request indicating at least the merchant order and transmitted by the merchant device, and thereby determines the payment order bound with the merchant order, according to the payment-order generation request. The foregoing is only an optional implementation for: determining, by a processing server, a payment order bound with a merchant order generated by a merchant device. In an embodiment of the present disclosure, the processing server may generate the payment order bound with the merchant order in another manner, after the merchant device generates the merchant order corresponding to the virtual value-added service that the user device requests to purchase.

In step S 15, the processing server transmits a payment pulling-up notification to the user device, according to the payment order.

In an optional embodiment, the processing server may transmit the payment pulling-up notification to the user device via the application server.

In an optional embodiment, the payment pulling-up notification may be configured to instruct the user device to pull up the payment channel, so that the user device can pay for the payment order.

That is, the merchant device generates the self-manageable merchant order, in response to a behavior of the user device for requesting purchasing the virtual value-added service. The processing server generates the payment order applicable to the payment channel and bound with the merchant order. Afterwards, the processing server may transmit the payment pulling-up notification to the user device, so as to instruct the user device to pull up the payment channel. Thereby, the user device is enabled to pay for the payment order through the payment channel.

In an optional embodiment, the processing server may generate a corresponding payment entry according to the payment order and transmit the payment entry to the user device, so as to transmit the payment pulling-up notification to the user device. Thereby, the user device may display a payment page after obtaining the payment entry, and the user pays for the payment order by performing an input operation for verifying payment on the payment page.

In an optional embodiment, in the step S 15, the processing server may first notify the merchant device of the payment order, such that the merchant device could confirm the payment order bound with the generated merchant order. Then, the merchant device instructs the processing server to transmit the payment pulling-up notification to the user device. That is, in the step S 15, the processing server notifies the merchant device of the payment order, obtains a feedback response from the merchant device, and then transmits the payment pulling-up notification to the user device (that is, the processing server transmits the payment pulling-up notification to the user device based on a notification from the merchant device).

A main objective of the above implementation is as follows. Payment of the user device is pulled up after the merchant device confirms and records the payment order bound with the generated merchant order.

The above implementation is only optional. In an embodiment of the present disclosure, the processing server may transmit the payment pulling-up notification to the user device while notifying the merchant device of the payment order bound with the merchant order.

In step S 16, the user device pulls up a payment channel, and transmits a payment request for the payment order to a payment channel server.

After receiving the payment pulling-up notification transmitted by the processing server, the user device may pull up a payment channel and perform an input operation for payment verification (where the input operation for payment verification includes, but is not limited to, inputting a payment password, inputting a payment fingerprint, inputting a payment face, and the like) for the payment order, so as to transmit the payment request for the payment order to the payment channel server.

In an optional embodiment, the user device may receive the payment entry for the payment order and display a corresponding payment page, and thereby the user may perform the input operation for payment verification on the payment page. The user device may transmit the payment request for the payment order to the payment channel server, in response to the input operation for payment verification being performed by the user on the payment page.

Figure 4 shows an exemplary presentation at a side of a user device, in a payment process according to an embodiment of the present disclosure. It is taken as an example that a we-media account (such as a we-media account named "Paid Paper" as shown in the figure) in an application provides paid subscription for papers. After a user taps a button for a paid subscription of a paper in a service page of the we-media account, the user device may construct a payment pulling-up request indicating the paid subscription. Accordingly, a merchant terminal generates a corresponding merchant order for which the user requests the paid subscription, and then may request the processing server to generate a corresponding payment order. The processing server generates the corresponding payment order, binds the payment order with the merchant order, and then may transmit a payment entry corresponding to the payment order to the user device. Thereby, the user device may display a corresponding payment page based on the payment entry, perform an input operation for payment verification, and transmit a payment request for the payment order to a payment channel server.

The payment pulling-up request and the payment request are for different stages. The payment pulling-up request is mainly generated when the user taps the payment pulling-up entry, and mainly configured to request to pull up the payment. The payment request is formed after the payment channel is pulled up and the user completes the input operation for payment verification, and is configured to request the payment channel server for fee deduction and payment.

In step S 17, the user device receives a payment voucher for the payment order, where the payment voucher is transmitted by the payment channel server.

In step S 18, the user device transmits the payment voucher to the processing server.

The steps S 15 to S 18 are only an optional implementation for: obtaining, by the processing server, a payment voucher for the payment order. In steps S 15 to S18, the processing server is mainly configured to transmit the payment pulling-up notification to the user device according to the payment order. Thereby, the processing server obtains the payment voucher corresponding to payment of the user device for the payment order, after the user device achieves the payment. The above is only an optional implementation for obtaining, by the processing server, a payment voucher for the payment order. In an embodiment of the present disclosure, the processing server may obtain the payment voucher for the payment order in another manner.

In an optional embodiment, the payment channel server may complete the payment of the user for the payment order based on the payment request of the user, and generate the corresponding payment voucher. The payment voucher indicates the payment order (such as the item ID) for which the user pays. The payment channel server may further transmit the payment voucher to the user device, and then the user device transmits the payment voucher to the processing server. (In an optional embodiment, the user device may transmit the payment voucher to the processing server via the application server.)

In an optional embodiment, the payment voucher may further indicate a payment result of the payment.

In an optional embodiment, the item ID representing the payment order is registered on the payment channel server by the application. Therefore, after generating the payment voucher corresponding to the item ID, the payment channel server may transmit the payment voucher to the application server, and the application server transmits the payment voucher to the connected processing server.

In step S 19, the processing server matches the merchant order that is bound with the payment order, to the payment voucher.

In an optional embodiment, the payment voucher may indicate the item ID for which the user device achieves the payment. Thereby, the merchant order bound with the item ID is matched to the payment voucher, to implement the step S19.

In an optional embodiment, one or more merchant orders may be bound with the item ID, in the aforementioned case that one transaction price corresponds to multiple item IDs that are sequentially used in turn. It is appreciated that a uniquely bound merchant order may be matched based on the item ID to the payment voucher, in a case that only one merchant order is bound with the item ID.

In a case that multiple merchant orders are bound with the item ID, the user device is required to participate in decision-making (for example, the user device requests to purchase a virtual value-added service of a same transaction price for multiple times, each time the purchase is under a same transaction price, and the user device does not achieve the final payment for the multiple times of purchase). The processing server may transmit the multiple merchant orders bound with the item ID to the user device, and the user device determines the matched merchant order bound with the payment order.

Described above is only an optional embodiment. In a case that a transaction price corresponds to a unique item ID each time the transaction price is used, the processing server may match a uniquely bound merchant order to the payment voucher based on the item ID.

In step S20, the processing server transmits a service providing notification to the merchant device, according to the matched merchant order, where the service providing notification indicates providing the corresponding virtual value-added service for the user device.

In an optional embodiment, the processing server may transmit the service providing notification to the merchant device via the application server.

Hence, the merchant device may receive the service providing notification transmitted by the processing server, after the user device performs payment for the payment order and the processing server matches the merchant order bound with the payment order to the payment voucher corresponding to the payment.

In an optional embodiment, the processing server may transmit the service providing notification to the merchant device, after matching the merchant order bound with the payment order to the payment voucher. After receiving the notification, the merchant device may determine the virtual value-added service indicated by the merchant order, and provide the corresponding virtual value-added service to the user device.

Further, the processing server may notify the user device of that an order status of the matched merchant order is service-to-be-provided.

Further, the user device may refresh the service page after the merchant device receives the notification, so that the user device is provided with permission to use the virtual value-added service. Correspondingly, the processing server may notify the user device of that the order status of the matched merchant order is service-provided.

Optionally, this embodiment of the present disclosure may be applicable to an in-app payment scenario. Correspondingly, the foregoing payment pulling-up request may be an in-app payment pulling-up request, the payment-order generation request may be an in-app payment-order generation request, the payment order may be an in-app payment order, the payment channel may be an in-app payment channel, the payment request may be an in-app payment request, and the payment voucher may be an in-app payment voucher.

Based on the foregoing payment method, the merchant device may generate the merchant order corresponding to the virtual value-added service, and the processing server determines the payment order that is applicable to a payment channel and bound with the merchant order, in a case that the user device purchases the virtual value-added service in an application. Hence, after the user device pays for the payment order and purchases the virtual value-added service, the processing server may find the bound merchant order based on the payment order for which the user device pays, and instruct the merchant device accurately of the merchant order providing such service. Thereby, the virtual value-added service purchased by the user device is accurately provided after the user device completes the payment.

In this embodiment of the present disclosure, a payment behavior of a user and the virtual value-added service that is actually purchased can be associated with each other via binding the payment order and the merchant order. Therefore, in a case there are multiple merchants in one application, the user may search for the bound merchant order via the payment order, so as to query a purchased order (that is, the merchant order) for the virtual value-added service. Payment support is achieved in one application, for virtual value-added services provided by the multiple merchants.

The method is applicable to a multi-merchant scenario, although the foregoing payment method is described in a scenario in which the user pays for the virtual value-added service provided by one merchant. Adaptably, merchant orders are from multiple merchants in the multi-merchant scenario, and the merchant orders corresponding to different virtual value-added services purchased by the user is still distinguishable through binding the payment order with the merchant order. Thereby, the merchant orders of the merchants can still be queried in a scenario in which multiple merchants provide virtual value-added services. The foregoing description can be extended to the multi-merchant scenario though described based on one merchant. Accurate matching for the merchant orders of different merchants can be implemented after the user completes the payment.

Further, in an embodiment of the present disclosure, the merchant order may be uniquely identified by a merchant order number. In a case that the item ID corresponds to the transaction price, the merchant device may input at least the transaction price and the merchant order number of the merchant order into the processing server, so that the processing server outputs the item ID to determine the payment order.

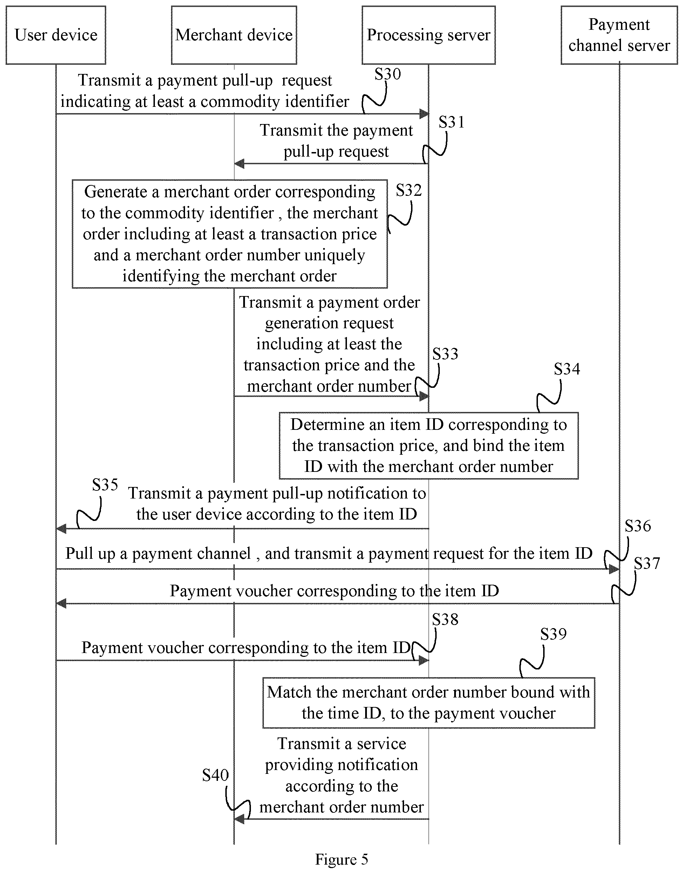

Figure 5 shows another optional signaling process of a payment method according to an embodiment of the present disclosure. The process shown in Figure 5 provides some details in implementing the steps as shown in Figure 2. The process shown in Figure 5 is an optional process, and the process logic as shown in Figure 2 may inspire a process different from that in Figure 5 when implementing such process logic.

Reference is made to Figure 5, where the process may include following steps S30 to S40.

In step S30, the user device transmits a payment pulling-up request to a processing server. The payment pulling-up request indicates at least a commodity identifier corresponding to a virtual value-added service that the user device requests to purchase.

In an embodiment of the present disclosure, the commodity identifier may be configured to identify the virtual value-added service uniquely. The virtual value-added service that the user requests to purchase may be indicated by the corresponding commodity identifier carried in the payment pulling-up request.

In an optional embodiment, a payment pulling-up entry on a service page of a merchant may be associated with the commodity identifier of the virtual value-added service. After the user taps the payment pulling-up entry of the virtual value-added service, the user device may determine the commodity identifier associated with the payment pulling-up entry tapped by the user, so as to generate the payment pulling-up request including at least the commodity identifier. The virtual value-added service is indicated by the commodity identifier.

In an optional embodiment, the commodity identifier of the virtual value-added service may be a commodity code or a delivery number that is set by the merchant for the provided virtual value-added service. A commodity identifier may represent a corresponding virtual value-added service uniquely. The commodity identifier is different from the item ID registered on the payment channel server.

In step S31, the processing server transmits the payment pulling-up request to a merchant device.

In step S32, the merchant device generates a merchant order corresponding to the commodity identifier, according to the payment pulling-up request. The merchant order includes at least a transaction price and a merchant order number, and the merchant order number identifies the merchant order uniquely.

In an optional embodiment, the merchant device may construct the merchant order corresponding to the commodity identifier, based on the commodity identifier carried in the payment pulling-up request. Thereby, the merchant order corresponding to the virtual value-added service is generated.

The merchant order may further indicate the transaction price, and the transaction price may be determined based on a price that is set by the merchant for the virtual value-added service. Further, in a case that the user requests to purchase multiple virtual value-added services altogether, the payment pulling-up request may further carry a transaction quantity of the virtual value-added services, and the merchant device may determine the transaction price based on the transaction quantity and a unit price of the virtual value-added service.

In addition, the merchant order generated by the merchant device may be represented by a unique merchant order number. Thereby, the merchant order is distinguished from other merchant orders of other merchants and the current merchant.

In an embodiment of the present disclosure, the generated merchant order may at least indicate basic information of the virtual value-added service that the user device requests to purchase currently, and the merchant order number that identifies the merchant order uniquely.

In an optional embodiment, the constructed merchant order may at least include a transaction price, a merchant order number that identifies the merchant order uniquely, and the like. Further, the merchant order may further include at least one of the following: a commodity identifier, a transaction quantity of virtual value-added services, general configuration information, a user identifier corresponding to the user device (such as an account of the user in the application), and a merchant identifier corresponding to the merchant device (such as an account of the merchant in the application).

In step S33, the merchant device transmits a payment-order generation request to the processing server. The payment-order generation request at least includes the transaction price and the merchant order number.

An item ID representing a payment order corresponds to the transaction price, and therefore the merchant device may add the transaction price into the payment-order generation request when transmitting the payment-order generation request to the processing server. In an embodiment of the present disclosure, the item ID is bound with the merchant order number that identifies the merchant order uniquely, so as to implement binding the payment order with the merchant order.

**In** step S34, the processing server determines an item ID corresponding to the transaction price, and binds the item ID with the merchant order number.

**In** an embodiment of the present disclosure, binding the item ID with the merchant order is implemented as follows. The processing server may determine the item ID corresponding to the transaction price and bind the item ID to the merchant order number, at least based on the transaction price and the merchant order number inputted through the payment-order generation request.

**In** an optional embodiment, a pool of item IDs may be set by the processing server. The processing server may record, in the pool of item IDs, item IDs that correspond to different transaction prices and are registered on the payment channel server, where one transaction price correspond to multiple item IDs that are sequentially used in turn. Thereby, when determining the item ID corresponding to the transaction price of the merchant order, the processing server may determine an item ID from the multiple item IDs corresponding to the transaction price that are recorded in the item ID pool, according to a current sequential number with which the user device uses such transaction price, where the determined ID corresponds to the current sequential number.

Further, the item ID may be bound with the merchant order number after being determined.

**In** step S35, the processing server transmits a payment pulling-up notification to the user device, according to the item ID.

After determining the item ID, the processing server may transmit the payment pulling-up notification to the user device, so as to instruct the user device to pull up a payment channel. Thereby, the user device is enabled to pay for the item ID through the payment channel. In an embodiment of the present disclosure, the item ID may be configured to represent a corresponding payment order.

**In** step S36, the user device pulls up a payment channel, and transmits a payment request for the item ID to a payment channel server.

**In** step S37, the user device receives a payment voucher transmitted by the payment channel server, where the payment voucher corresponds to the item ID.

The payment channel server may complete payment of the user for the item ID, based on the payment request of the user, and generate the corresponding payment voucher. The payment voucher indicates the item ID for which the user pays. The payment channel server may further transmit the payment voucher to the user device, and the user device transmits the payment voucher to the processing server.

**In** step S38, the user device transmits the payment voucher corresponding to the item ID to the processing server.

In step S39, the processing server matches the merchant order number that is bound with the item ID, to the payment voucher.

In an optional embodiment, in a case that a quantity of merchant order numbers bound with the item ID is one (that is, an item ID is uniquely bound with a merchant order), the merchant order number uniquely bound with the item ID may be matched to the payment voucher.

In a case that there are multiple merchant order numbers bound with the item ID (that is, the item ID is bound with multiple merchant orders), the merchant order number bound with the item ID may be matched to the payment voucher with participation of the user device. The processing server may transmit merchant orders corresponding to the multiple merchant order numbers to the user device, according to the multiple merchant order numbers bound with the item ID. The user device determines the matched merchant order from the multiple merchant orders. After determining the matched merchant order, the user device may notify the processing server of the determined merchant order number of the merchant order. Accordingly, the processing server matches such merchant order number bound with the item ID to the payment voucher.

As an example, the case that the item ID is bound with multiple merchant orders is as follows. A we-media account in a social application provides multiple paid subscription articles under a price of ¥6. Each time after a user taps for payment, a merchant device may generate a merchant order for a paid subscription accordingly, and a social application server may generate a payment order by using an item ID corresponding to ¥6. It is assumed that there are ten pollable item IDs corresponding to the transaction price ¥6.

Each time tapping for payment, the user may not perform an actual input operation for payment verification. In such case, an item ID corresponding to ¥6 used for the first payment tap would be same as that for the eleventh payment tap. That is, the same item ID is bound with both paid-subscription merchant orders associated with the first payment tap and the eleventh payment tap. As a result, after the user performs an input operation for payment verification for the eleventh payment tap (that is, the user actually pays for the eleventh payment tap), the processing server cannot determine whether the item ID currently fed back by the payment channel server is bound with the paid-subscription merchant order for the first payment tap or the eleventh payment tap of the user. Therefore, there are two pending merchant orders which require the user to participate in decision-making.

A basic cause of the above issue is that the in-app payment channels such as IAP and GW cannot tell a developer whether the user actually pays for the first payment tap or the eleventh payment tap. A payment cancellation notification is dubious, even if it is generated by the payment channel server when the user cancels the payment of the first payment click. Therefore, when there are multiple merchant orders bound with the item ID, a mechanism of the user participating in decision-making is inventively introduced in this embodiment of the present disclosure.

In step S40, the processing server transmits a service providing notification to the merchant device, according to the matched merchant order number, where the service providing notification indicates providing the corresponding virtual value-added service for the user device.

After matching the merchant order number bound with the item ID to the payment voucher, the processing server may transmit the service providing notification carrying the merchant order number to the merchant device, to instruct the merchant device to provide the user with the virtual value-added service indicated by the merchant order corresponding to the merchant order number. Correspondingly, after receiving the service providing notification, the merchant device may determine the merchant order identified by the merchant order number, and determine the virtual value-added service provided for the user device, according to the commodity identifier indicated in the merchant order.

Further, the processing server may further notify the user device according to the merchant order number, of that a status of the merchant order corresponding to the merchant order number has turned to be service-to-be-provided.

Further, the processing server may obtain the merchant order transmitted by the merchant device (for example, in the step S33, the merchant device may transmit the merchant order along with the payment-order generation request to the processing server; or the merchant device may upload the merchant order to the processing server independently). Thereby, the processing server may determine the merchant order corresponding to the matched merchant order number, so as to support query of the user device for the merchant order in the status of service-to-be-provided.

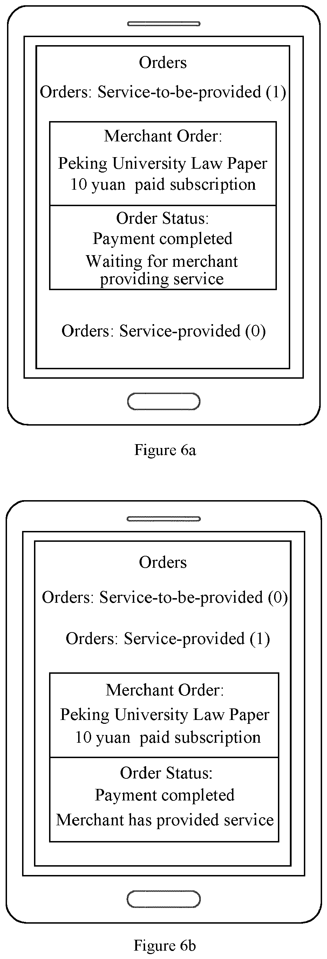

Correspondingly, the user device may query the order status of the merchant order from the processing server, load an order status page, and display the merchant order in the status of service-to-be-provided, which is fed back by the processing server. Reference is made to Figure 6a.

Correspondingly, after receiving the notification transmitted by the processing server, the merchant device may determine the merchant order corresponding to the matched merchant order number, and determine the corresponding virtual value-added service according to the commodity identifier of the merchant order. Thereby, the corresponding virtual value-added service is provided for the user device.

In an embodiment, after determining the merchant order corresponding to the matched merchant order number and determining the to-be-provided virtual value-added service based on the merchant order, the merchant device may control the user device to refresh a service page, notify the user device of that the virtual value-added service has been provided, and grant the user device permission to use the virtual value-added service.

Correspondingly, the processing server may update the order status of the merchant order to be service-provided, and display the status of the merchant order to be service-provided on the order status page. Reference is made to Figure 6b.

In the above payment method, before the user device pays for the item ID, the processing server may bind the item ID with the merchant order number, where the merchant order number identifies the merchant order. Thereby, the user device may query the merchant order of the virtual value-added service purchased by the user, through the merchant order number bound with the item ID, after achieving the payment for the item ID. A payment behavior of the user can be associated with the virtual value-added service that is actually purchased, through binding the item ID with the merchant order number. Therefore, in a case that there are multiple merchants in an application, the user may query the bound merchant order number based on the item ID. Thereby, the purchased order (that is, the merchant order) for the virtual value-added service can be queried, and payment support can be provided in one application for virtual value-added services provided by the multiple merchants.

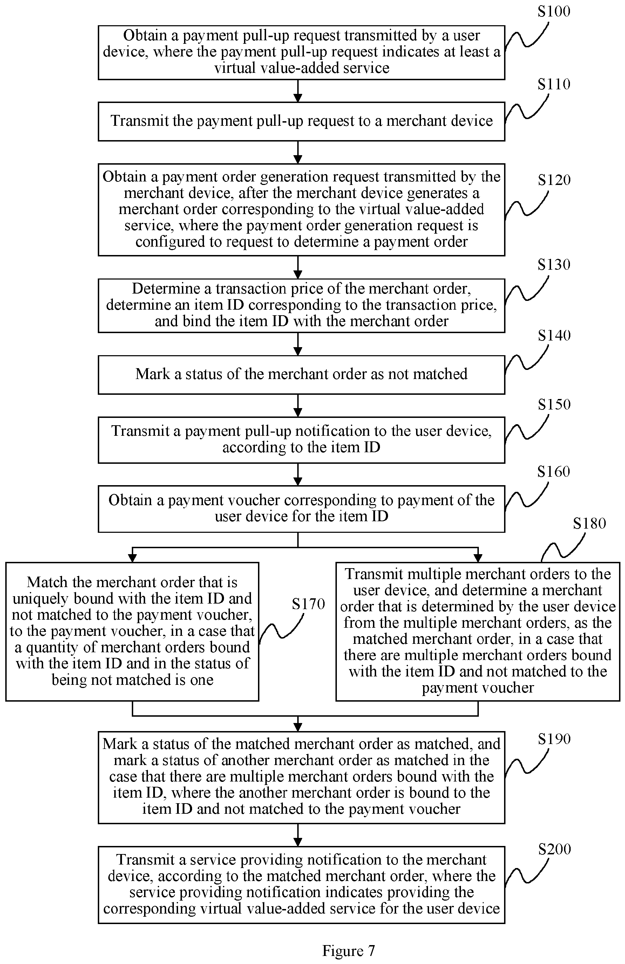

In an optional embodiment, when the merchant order bound with the payment order is matched to the payment voucher, a status of the merchant order bound with the item ID may be set for accurate matching of the merchant order. Figure 7 shows an optional flow of a payment method according to an embodiment of the present disclosure, from a perspective of a processing server. The flow may be performed by the processing server. Referring to Figure 7, the procedure may include following steps S100 to S200.

In step S 100, the processing server obtains a payment pulling-up request transmitted by the user device. The payment pulling-up request indicates at least a virtual value-added service.

In step S 110, the processing server transmits the payment pulling-up request to a merchant device.

Hence, the processing server may transmit the payment pulling-up request transmitted by the user device, to the merchant device.

In step S 120, the processing server obtains a payment-order generation request transmitted by the merchant device, after the merchant device generates a merchant order corresponding to the virtual value-added service. The payment-order generation request is configured to request to determine a payment order.

In step S130, the processing server determines a transaction price of the merchant order, determines an item ID corresponding to the transaction price, and binds the item ID with the merchant order.

In an optional embodiment, the transaction price may be carried in the payment-order generation request.

In an optional embodiment, the payment-order generation request may further include a merchant order number that identifies the merchant order uniquely. The processing server may bind the item ID with the merchant order number, by binding the item ID with the merchant order number.

In step S 140, the processing server marks a status of the merchant order as not matched.

In an embodiment of the present disclosure, the status of the merchant order may be marked as not matched, after the item ID is bound with the merchant order, because the merchant order has not been matched to the payment voucher.

The merchant order bound with the payment order is matched to the payment voucher after the payment voucher is obtained. Therefore, when the user device requests to pull up the payment consecutively for multiple times but obtains no payment voucher (for example, the user device requests to pull up the payment consecutively for multiple times, the merchant device generates a corresponding merchant order each time, the processing server determines a corresponding item ID each time, but the user device cancels the payment after pulling up the payment channel each time), there may be multiple merchant orders in the status of being not matched. Further, there may be multiple merchant orders in the status of being not matched that are bound with the same item ID (for example, one transaction price corresponds to multiple item IDs sequentially used in turn, and in a case that a quantity of times for which the user device requests to pull up payment of virtual value-added services under the same transaction price is higher than a quantity of pollalbe item IDs corresponding to the transaction price, the processing server may bind such item IDs repeatedly to the merchant orders for the virtual value-added services under the transaction price).

In step S 150, the processing server transmits a payment pulling-up notification to the user device, according to the item ID.

In step S 160, the processing server obtains a payment voucher corresponding to payment of the user device for the item ID.

In an optional embodiment, after receiving the payment pulling-up notification, the user device may pull up a payment channel, perform an input operation for payment verification, and transmit a payment request for the item ID to a payment channel server. Thereby, after the payment verification succeeds, the payment channel server may generate the payment voucher corresponding to the item ID, and transmit the payment voucher to the user device. Then, the user device may transmit the payment voucher to the processing server.

In an optional embodiment, the payment channel server may transmit the payment voucher directly to the processing server, after generating the payment voucher corresponding to the item ID.

In step S 170, in a case that a quantity of merchant orders in the status of being not matched that are bound with the item ID is one, the processing server matches the merchant order in the status of being not matched that is uniquely bound with the item ID, to the payment voucher.

In step S180, in a case that there are multiple merchant orders in the status of being not matched that are bound with the item ID, the processing server transmits the multiple merchant orders to the user device, and determines a merchant order, which is determined by the user device from the multiple merchant orders, as the merchant order matched to the payment voucher.

In an optional embodiment, in the steps S170 and S180, the merchant order may be represented by a merchant order number.

In step S 190, the processing server marks a status of the matched merchant order as matched, and marks a status of the merchant order, which is bound with the item ID and not matched to the payment voucher, as matched in a case that there are multiple merchant orders bound with the item ID.

In an optional embodiment, after the matched merchant order is determined from the merchant orders that are bound with the item ID, a status of the matched merchant order may be marked as matched, and the status of the merchant order that is bound with the item ID and not matched to the payment voucher is also required to be marked as matched. Thereby, these merchant orders would no longer participate in subsequent matching.

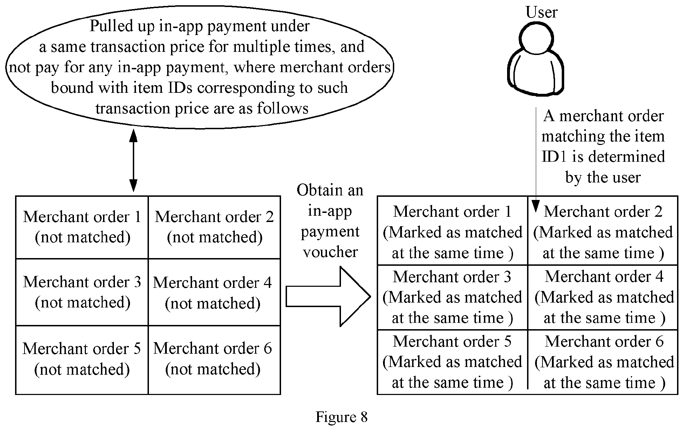

In-app payment is taken as an example. As shown in Figure 8, in a case that the user pulls up in-app payment under the same transaction price for multiple times but does not pay actually, the processing server may bind the item ID to the merchant order, and mark the status of the currently bound merchant order as not matched. There may be multiple merchant orders in the status of being not matched that are bound with a same item ID.

After the user device achieves the in-app payment for the item ID, the processing server may match the merchant order to an in-app payment voucher with participation of the user in decision-making. The matching is performed among the merchant orders in a status of being not matched that are bound with the item ID, according to the item ID indicated by the in-app payment voucher. The status of the matched merchant order needs to be marked as matched, and further, the status of other merchant orders that are bound with the item ID and not matched to the in-app payment voucher is also marked as matched.

In step S200, the processing server transmits a service providing notification to the merchant device, according to the matched merchant order, where the service providing notification indicates providing the corresponding virtual value-added service for the user device.

In an optional embodiment, a sequence of the steps S190 and step S200 may be not limited.

In this embodiment of the present disclosure, there may be multiple merchant orders bound with the item ID. In such case, a mechanism of the user participating in decision-making may be introduced, and the status of the merchant order is set. Thereby, it is ensured that after the matching is performed once on the merchant orders, the merchant orders that are currently matched and not matched to the payment voucher are both marked as matched, so that these merchant orders would no longer participate in subsequent matching. Matching accuracy for the merchant order is greatly guaranteed.

In an optional embodiment, the processing server may further determine settlement data of the payment channel server according to the payment voucher. The settlement data includes at least one of: a commodity identifier corresponding to the virtual value-added service, a transaction price of the merchant order, a transaction currency, a settlement amount, merchant identity information corresponding to the merchant device, user identity information corresponding to the user device, or the merchant order number of the merchant order.

After determining the settlement amount, the processing server may share the settlement amount with a merchant corresponding to the merchant device, according to a preset ratio.

As an example of application, hereinafter an in-app payment in a social application mini-app serves as a scenario for illustration. A user may perform in-app payment for different virtual value-added services in mini-apps of different merchants, or perform in-app payment for same or different virtual value-added services in a mini-app of a same merchant.

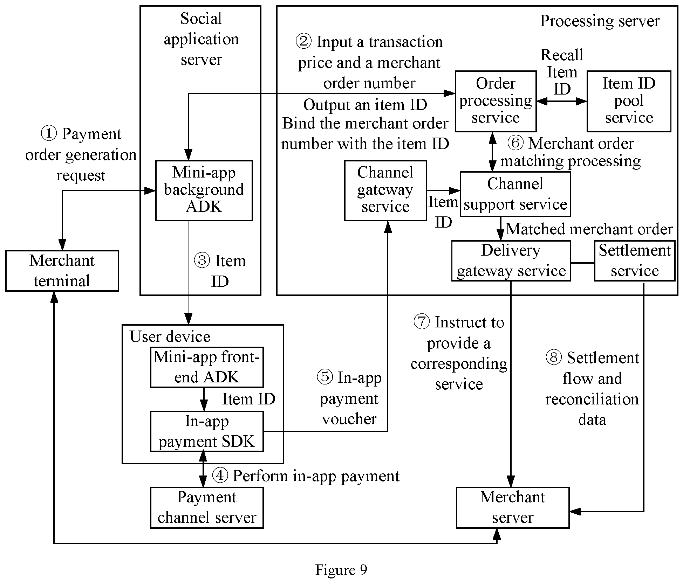

As shown in Figure 9, the user device may interact with a mini-app background SDK of a social application server, through a mini-app front-end SDK. The user device may interact with a payment channel server through an in-app payment SDK. A merchant device may include a merchant terminal and a merchant server. The merchant terminal may interact with the mini-app background SDK of the social application server, through the mini-app front-end SDK.

The social application server includes the mini-app background SDK. A processing server is connected to the social application server, and may communicate with the merchant device and the user device through the mini-app background SDK (where in Figure 9, some illustrations of the processing server interacting with the merchant device and the user device through the mini-app background SDK are omitted for conciseness). Further, the processing server may be provided with detailed service functions, such as an order processing service, a channel gateway service, a channel support service, an item ID pool service, a delivery gateway service, or a settlement service. These service functions may be implemented through a program service, or through the server.

Reference is further made to Figure 9, where it is taken as an example that the user pays for a paid subscription in a mini-app. When the user requests to pull up the payment of the paid subscription, the processing server may exchange an in-app payment pulling-up request of the paid subscription, with the mini-app front-end SDK of the user device and the mini-app front-end SDK of the merchant terminal, through the mini-app background SDK. Afterwards, a process of this application example may include following steps (1) to (8).

In step (1), the merchant terminal generates a merchant order for the paid subscription, and transmits a payment-order generation request to the mini-app background SDK through the mini-app front-end SDK of the merchant terminal. The payment-order generation request carries a transaction price and a merchant order number of the merchant order.

In step (2), the mini-app background SDK forwards the payment-order generation request to the order processing service of the processing server. In such process, the transaction price and the merchant order number may be inputted into the order processing service. The order processing service outputs an item ID corresponding to the transaction price, according to item IDs corresponding to all transaction prices and recorded in a pool of item IDs, and binds the item ID with the merchant order number.

In step (3), the mini-app background SDK transmits the item ID to the mini-app front-end SDK of the user device. In an optional embodiment, in such process, the mini-app background SDK may first transmit the item ID to the merchant terminal, and the merchant terminal confirms and records the item ID that is bound with the generated merchant order. Then, the merchant terminal transmits the item ID to the mini-app front-end SDK of the user device, through the mini-app background SDK. Alternatively, the mini-app background SDK directly transmits the item ID to the mini-app front-end SDK of the user device while notifying the merchant terminal of the item ID.

In step (4), the user device pulls up an in-app payment channel through the in-app payment SDK, to perform in-app payment for the item ID.

In step (5), the user device transmits an in-app payment voucher to the channel gateway service, through the in-app payment SDK, where the in-app payment voucher corresponds to the item ID and is fed back by a payment channel server.

In step (6), the channel support service matches the merchant order to the in-app payment voucher, which corresponds to the item ID and is fed back by the channel gateway service. Thereby, a matched merchant order is obtained from the merchant orders, which are bound with the item ID and outputted by the order processing service.

In step (7), the delivery gateway instructs the merchant server to provide a corresponding service for the user device, based on the matched merchant order. Thereby, the merchant server determines to provide a paid subscription service for the user device, based on the matched merchant order.

In step (8), the settlement service transmits a settlement flow, reconciliation data, or the like, for the merchant to the merchant server.

The virtual value-added service provided by the merchant of the social application mini-app is illustrated in the above example. In practice, this embodiment of the present disclosure may be further extended to all payment scenarios of virtual value-added services in an application, including a multi-merchant scenario and a single-merchant scenario in a single application. In addition, support for payment channels besides the IAP and the GW is dynamically pluggable and configurable. Therefore, the payment method provided in embodiments of the present disclosure is also applicable to another payment channel, for example, a payment channel applied in an e-commerce shopping scenario.

Similarly, the payment method provided in embodiments of the present disclosure is applicable not only to a mobile platform, but also to all of other current platforms, for example, a PC or a Web end.

The payment method provided in embodiments of the present disclosure has at least following advantages.

A conventional payment method does not support virtual value-added services from multiple merchants. In embodiments of the present disclosure, the bound merchant order may be queried based on the payment order, in a case that there are multiple merchants in an application. Thereby, a purchased order (that is, the merchant order) for a virtual value-added service can be queried, and payment support is provided in one application for virtual value-added services provided by the multiple merchants. Embodiments of the present disclosure not only provide a multi-merchant payment solution for social application mini-apps and official accounts, but also are applicable to other similar multi-merchant scenarios in an application.

When the merchant order bound with the payment order is matched to the payment voucher, a mechanism of the user participating in decision-making may be applied, in a case that there are multiple merchant orders bound with the payment order. Thereby, it is ensured that the merchant order for which the payment order actually pays is matched to the payment voucher, and accurate payment is guaranteed for multi-merchant scenarios, such as mini-apps and public accounts in a social application.

With the payment method according to embodiments of the present disclosure, a merchant can manage a merchant order of its own while providing a virtual value-added service in an application, thereby providing great convenience for the merchant.

The settlement flow of the payment channel is provided for the merchant to check.

Hereinafter a payment apparatus according to an embodiment of the present disclosure is illustrated from a perspective of a processing server. The payment apparatus may be regarded as a program module that needs to be configured by the processing server to implement the payment method provided in embodiments of the present disclosure. The payment apparatus described hereinafter and the payment method described hereinabove may refer to each other in the content correspondingly.

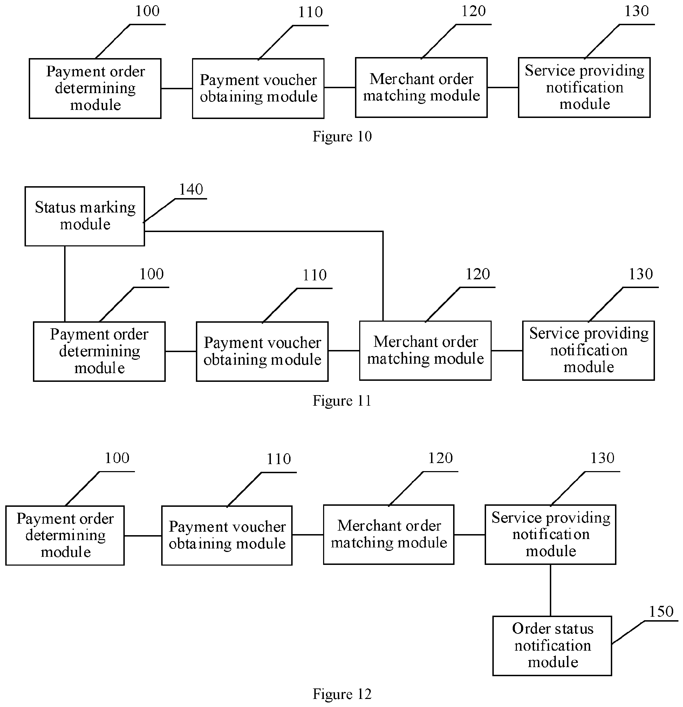

Figure 10 is a block diagram of a structure of a payment apparatus according to an embodiment of the present disclosure. The apparatus may be applied to a processing server. Referring to Figure 10, the apparatus may include a payment order determining module 100, a payment voucher obtaining module 110, a merchant order matching module 120, and a service providing notification module 130.

The payment order determining module 100 is configured to determine a payment order that is bound with a merchant order, where the merchant order is generated by a merchant device and corresponds to a virtual value-added service that a user device requests to purchase.

The payment voucher obtaining module 110 is configured to obtain a payment voucher for the payment order.

The merchant order matching module 120 is configured to match the merchant order that is bound with the payment order, to the payment voucher.

The service providing notification module 130 is configured to transmit a service providing notification to the merchant device according to the matched merchant order, where the service providing notification indicates providing the virtual value-added service for the user device.

In an optional embodiment, the payment order determining module 100, which is configured to determine the payment order that is bound with a merchant order generated by a merchant device, may be configured to perform following steps.

A payment pulling-up request of the user device is transmitted to the merchant device, where the payment pulling-up request indicates at least the virtual value-added service that the user device requests to purchase.

A payment-order generation request transmitted by the merchant device is obtained after the merchant device generates the merchant order corresponding to the virtual value-added service, where the payment-order generation request indicates at least the merchant order.

The payment order bound with the merchant order is determined according to the payment-order generation request.

In an optional embodiment, the payment voucher obtaining module 110, which is configured to obtain the payment voucher for the payment order may be configured to perform following steps.

A payment pulling-up notification is transmitted to the user device, according to the payment order.

The payment voucher corresponding to payment of the user device for the payment order is obtained.

In an optional embodiment, the payment order determining module 100, which is configured to determine the payment order bound with the merchant order may according to the payment-order generation request, may be configured to perform following steps.

A transaction price of the merchant order is determined according to the payment-order generation request.

An item ID corresponding to the transaction price is determined and bound with the merchant order, where the item ID is registered on a payment channel server.

In an optional embodiment, the payment-order generation request at least includes: a merchant order number that identifies the merchant order uniquely, and the transaction price of the merchant order.

The payment order determining module 100, which is configured to determine the transaction price of the merchant order according to the payment-order generation request, may be configured to perform a following step.

The transaction price of the merchant order carried in the payment-order generation request is determined.

The payment order determining module 100, which is configured to bind the item ID with the merchant order, may be configured to perform a following step.

The item ID is bound with the merchant order number.

In an optional embodiment, the merchant order matching module 120, which is configured to match the merchant order that is bound with the payment order to the payment voucher, may be configured to perform following steps.

In a case that a quantity of merchant orders bound with the item ID is one, the merchant order uniquely bound with the item ID is matched to the payment voucher.

In a case that there are multiple merchant orders bound with the item ID, the multiple merchant orders is transmitted to the user device, and a merchant order that is determined by the user device from the multiple merchant orders is determined to be the matched merchant order.

in a case that a quantity of times for which the user device requests to pull up payment of virtual value-added services under a same transaction price is greater than a quantity of pollable item IDs corresponding to such transaction price, the pollable item IDs are repeatedly used for binding with the merchant orders of such transaction price.

In an optional embodiment, the payment order determining module 100, which is configured to determine the item ID corresponding to the transaction price, may be configured to perform a following step.

An item ID is determined from multiple item IDs corresponding to the transaction price, according to a current sequential number with which the user device uses the transaction price, where the multiple item IDs corresponding to the transaction price are sequentially used in turn.

Figure 11 is another block diagram of a structure of a payment apparatus according to an embodiment of the present disclosure. Reference is made to both Figure 10 and Figure 11. In an optional embodiment, the apparatus may further include a status marking module 140.

The status marking module 140 is configured to mark a status of the merchant order as not matched after the item ID is bound with the merchant order, and mark a status of the matched merchant order as matched.

In an optional embodiment, the status marking module 140 may be further configured to mark a status of another merchant order as matched, after the merchant order bound with the payment order is matched to the payment voucher, in a case that there are multiple merchant orders bound with the item ID. The another merchant order is bound with the item ID and is not matched to the payment voucher.

In an optional embodiment, the matched merchant order is represented by a merchant order number matched to the payment voucher. The service providing notification module 130, which is configured to transmit, according to the matched merchant order, the service providing notification that indicates providing the corresponding virtual value-added service for the user device to the merchant device, may be configured to perform following steps.

The service providing notification carrying the merchant order number is transmitted to the merchant device, according to the matched merchant order number. Thereby, the merchant device is informed to provide the user device with the virtual value-added service indicated by the merchant order of the merchant order number.

In an optional embodiment, the payment voucher obtaining module 110, which is configured to transmit the payment pulling-up notification to the user device according to the payment order, may be configured to perform following steps.

A payment entry is generated corresponding to the item ID.

The payment entry is transmitted to the user device, so that the user device displays a corresponding payment page according to the payment entry.

Figure 12 is another block diagram of a structure of a payment apparatus according to an embodiment of the present disclosure. Reference is made to both Figure 10 and Figure 12. In an optional embodiment, the apparatus may further include an order status notification module 150.

The order status notification module 150 is configured to: notify the user device of that an order status of the matched merchant order is service-to-be-provided, after the service providing notification is transmitted to the merchant device; and notify the user device of that the order status of the matched merchant order is service-provided, after the merchant device provides the virtual value-added service for the user device.

In an optional embodiment, the payment pulling-up request at least includes a commodity identifier corresponding to the virtual value-added service. The commodity identifier identifies the virtual value-added service uniquely. The merchant order corresponds to the commodity identifier.

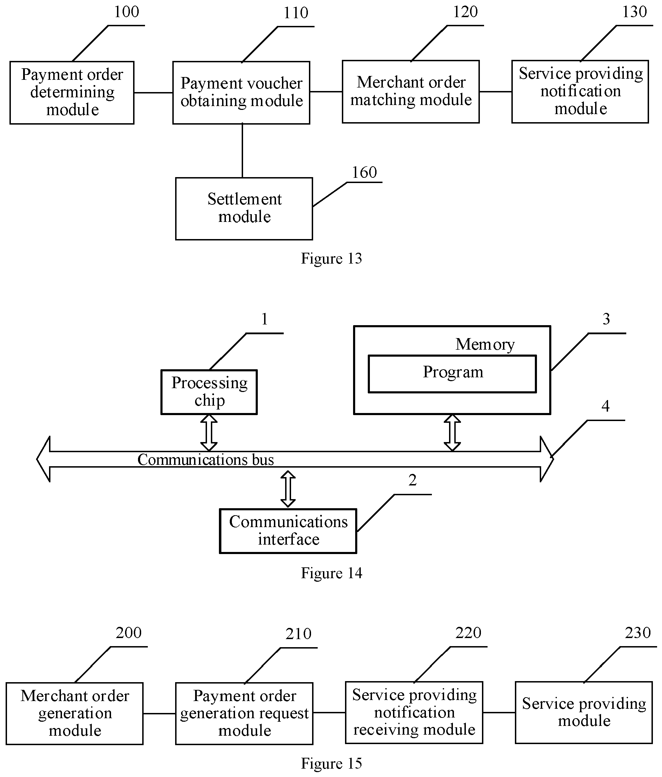

Figure 13 is another block diagram of a structure of a payment apparatus according to an embodiment of the present disclosure. Reference is made to both Figure 10 and Figure 13. In an optional embodiment, the apparatus may further include a settlement module 160.

The settlement module 160 is configured to determine settlement data according to the payment voucher, and share a settlement amount with a merchant corresponding to the merchant device based on a preset ratio. The settlement data including at least any one of: a commodity identifier corresponding to the virtual value-added service, a transaction price of the merchant order, a transaction currency, the settlement amount, merchant identity information corresponding to the merchant device, user identity information corresponding to the user device, or a merchant order number of the merchant order.

A processing server is further provided according to an embodiment of the present disclosure. The processing server may load the foregoing module, which is embodied as a program and applied to the processing server, to implement the payment method provided in embodiments of the present disclosure. An optional hardware structure of the processing server may be as shown in Figure 14, including: at least one processing chip 1, at least one communications interface 2, at least one memory 3, and at least one communications bus 4.

In this embodiment of the present disclosure, there is at least one processing chip 1, at least one communications interface 2, at least one memory 3, and at least one communications bus 4. The processing chip 1, the communications interface 2, and the memory 3 communicate with each other via the communications bus 4.

In an optional embodiment, the communications interface 2 may be an interface of a communications module (such as an interface of a GSM module). The processing chip 1 may be a central processing unit (CPU), an application-specific integrated circuit (ASIC), or one or more integrated circuits configured to implement embodiments of the present disclosure.

The memory 3 may include a high-speed RAM memory, and may further include a nonvolatile memory, for example, at least one magnetic disk storage.

The memory 3 stores a program. The processing chip 1 invokes the program stored in the memory 3, to implement steps in the foregoing payment method performed by the processing server.

A storage medium is further provided according to an embodiment of the present disclosure. The storage medium may store a program, where the program is executable by a processing chip to implement steps of the foregoing payment method performed by the processing server.

In an optional embodiment, the program mainly implements following functions.

A payment order that is bound with a merchant order is determined, where the merchant order is generated by a merchant device and corresponds to a virtual value-added service that the user device requests to purchase.

A payment voucher for the payment order is obtained.

The merchant order bound with the payment order is matched to the payment voucher.

A service providing notification is transmitted to the merchant device, according to the matched merchant order, where the service providing notification indicates providing the corresponding virtual value-added service for the user device.

In an optional embodiment, detailed and extended functions of the program may refer to the content of the aforementioned payment method.

Hereinafter a payment apparatus according to an embodiment of the present disclosure is illustrated from a perspective of a merchant device. The payment apparatus may be regarded as a program module that needs to be configured by the merchant device to implement the payment method provided in embodiments of the present disclosure. The payment apparatus described hereinafter and the payment method described hereinabove may refer to each other in the content correspondingly.

Figure 15 is another block diagram of a structure of a payment apparatus according to an embodiment of the present disclosure. The apparatus may be applied to a merchant device. Referring to Figure 15, the apparatus may include a merchant order generation module 200, a payment-order generation request module 210, a service providing notification receiving module 220, and a service providing module 230.

The merchant order generation module 200 is configured to generate a merchant order corresponding to a virtual value-added service that a user device requests to purchase.

The payment-order generation request module 210 is configured to transmit a payment-order generation request to a processing server, where the payment-order generation request is configured to request the processing server to generate a payment order that is bound with the merchant order.

The service providing notification receiving module 220 is configured to receive a service providing notification, which is transmitted by the processing server after the processing server obtains a payment voucher corresponding to the payment order and matches the merchant order that is bound with the payment order to the payment voucher.

The service providing module 230 is configured to provide the virtual value-added service corresponding to the matched merchant order for the user device, according to the service providing notification.

In an optional embodiment, the merchant order generation module 200, which is configured to generate the merchant order corresponding to the virtual value-added service that the user device requests to purchase, may be configured to perform following steps.

A payment pulling-up request of the user device is obtained. The payment pulling-up request indicates at least the virtual value-added service that the user device requests to purchase.

The merchant order corresponding to the virtual value-added service is generated.

In an optional embodiment, the merchant order at least includes: a merchant order number that identifies the merchant order uniquely, and a transaction price of the merchant order.

The payment-order generation request module 210, which is configured to transmit the payment-order generation request to the processing server, may be configured to perform a following step.

The payment-order generation request carrying at least the merchant order number and the transaction price is transmitted to the processing server. The payment order is bound with the merchant order number.

In an optional embodiment, the payment order is represented by an item ID corresponding to the transaction price. The transaction price corresponds to multiple item IDs that are sequentially used in turn.

In an optional embodiment, the service providing module 230, which is configured to provide the virtual value-added service corresponding to the matched merchant order for the user device according to the service providing notification, may be configure to perform following steps.

The merchant order corresponding to the merchant order number is determined, according to the merchant order number carried in the service providing notification.

The virtual value-added service indicated by the merchant order is determined.

The determined virtual value-added service is provided for the user device.

In an optional embodiment, the payment pulling-up request at least includes a commodity identifier corresponding to the virtual value-added service. The commodity identifier identifies the virtual value-added service uniquely.

The merchant order generation module 200, which is configured to generate the merchant order corresponding to the virtual value-added service that the user device requests to purchase, may be configured to perform a following step. A merchant order corresponding to the commodity identifier is generated.

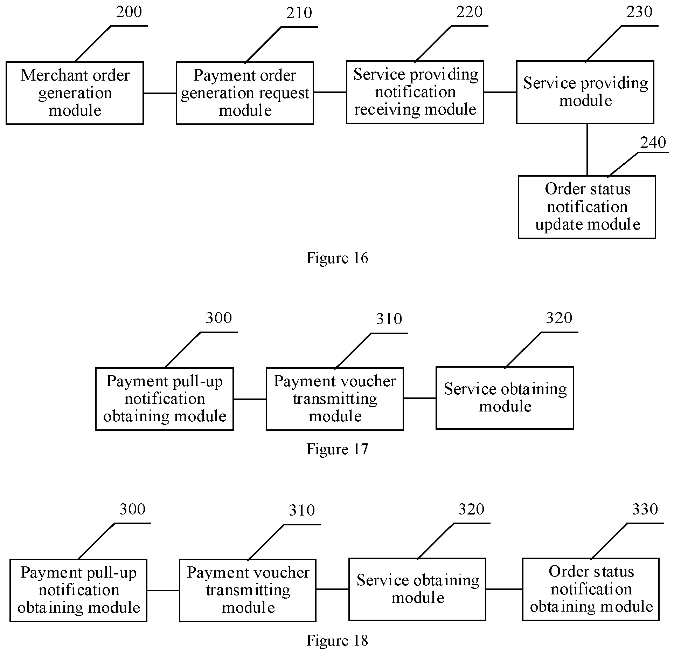

Figure 16 is another block diagram of a structure of a payment apparatus according to an embodiment of the present disclosure. Reference is made to both Figure 15 and Figure 16. In an optional embodiment, the apparatus may include an order status notification update module 240.

The order status notification update module 240 is configured to instruct the processing server to update an order status of the matched merchant order to be service-provided, after the virtual value-added service corresponding to the matched merchant order is provided for the user device.

A merchant device is further provided according to an embodiment of the present disclosure. The merchant device may load the foregoing module, which is embodied as a program and applied to the processing server, to implement the payment method provided in embodiments of the present disclosure.

An optional hardware structure of the merchant device may be as shown in Figure 14. In an optional embodiment, the merchant device may include at least one memory and at least one processing chip. The memory stores a program, and the processing chip invokes the program to implement steps of the foregoing payment method performed by the merchant device.

A storage medium is further provided according to an embodiment of the present disclosure. The storage medium may store a program, where the program is executable by a processing chip to implement steps of the foregoing payment method performed by the merchant device.

In an optional embodiment, the program mainly implements following functions.

A merchant order corresponding to a virtual value-added service that the user device requests to purchase is generated.

A payment-order generation request is transmitted to a processing server. The payment-order generation request is configured to request the processing server to generate a payment order bound with the merchant order.

A service providing notification transmitted by the processing server is received, after the processing server obtains a payment voucher corresponding to the payment order and matches the merchant order that is bound with the payment order to the payment voucher.

The virtual value-added service corresponding to the matched merchant order is provided for the user device, according to the service providing notification.

In an optional embodiment, detailed and extended functions of the program may refer to the content of the aforementioned payment method.

Hereinafter a payment apparatus according to an embodiment of the present disclosure is illustrated from a perspective of a user device. The payment apparatus may be regarded as a program module that needs to be configured by the user device to implement the payment method provided in embodiments of the present disclosure. The payment apparatus described hereinafter and the payment method described hereinabove may refer to each other in the content correspondingly.

Figure 17 is another block diagram of a structure of a payment apparatus according to an embodiment of the present disclosure. The apparatus may be applied to the user device. Referring to Figure 17, the apparatus may include a payment pulling-up notification obtaining module 300, a payment voucher transmitting module 310, and a service obtaining module 320.

The payment pulling-up notification obtaining module 300 is configured to obtain a payment pulling-up notification that is transmitted by a processing server and indicates at least a payment order, where the payment order is bound with a merchant order generated by a merchant device, and the merchant order corresponds to a virtual value-added service that the user device requests to purchase.

The payment voucher transmitting module 310 is configured to transmit a payment voucher corresponding to the payment order to the processing server.

The service obtaining module 320 is configured to obtain a virtual value-added service, which is provided by the merchant device after the processing server matches the merchant order that is bound with the payment order to the payment voucher and instructs the merchant device to provide the virtual value-added service corresponding to the matched merchant order.

In an optional embodiment, the payment apparatus may be further configured to transmit a payment pulling-up request indicating at least the virtual value-added service to the processing server, before obtaining the payment pulling-up notification that is transmitted by the processing server and indicates at least the payment order, so that the processing server transmits the payment pulling-up request to the merchant device, and the merchant device generates the merchant order corresponding to the virtual value-added service.

In an optional embodiment, the payment pulling-up notification obtaining module 300, which is configured to obtain the payment pulling-up notification that is transmitted by the processing server and indicates at least the payment order, may be configure to perform a following step.

The payment pulling-up notification transmitted by the processing server is obtained, after the processing server determines the payment order that is bound with the merchant order generated by the merchant device.

In an optional embodiment, the payment apparatus, which is configured to transmit the payment pulling-up request indicating at least the virtual value-added service to the processing server, may be configured to perform following steps.

A service page of a merchant is accessed through an application.

A payment pulling-up entry for the virtual value-added service on the service page is activated, to generate the payment pulling-up request. The payment pulling-up request indicates at least the virtual value-added service.

In an optional embodiment, accessing the service page of the merchant through the application may include a following step.

A link QR code on a program page of the merchant is scanned through the application, or a link address on a program page is accessed through the application, so as to load the program page of the merchant. The program page provides at least one payment pulling-up entry for the virtual value-added service provided by the merchant.

In an optional embodiment, generating the payment pulling-up request may include following steps.

A commodity identifier associated with the activated payment pulling-up entry is determined, and the payment pulling-up request including at least the commodity identifier is generated.

In an optional embodiment, the payment pulling-up notification obtaining module 300, which is configured to obtain the payment pulling-up notification that is transmitted by the processing server and indicates at least the payment order, may be configured to perform a following step. The payment entry for the payment order is obtained.

In an optional embodiment, the payment voucher transmitting module 310, which is configured to transmit the payment voucher corresponding to the payment order to the processing server, may be configured to perform following steps.

Payment for the payment order is performed according to the payment pulling-up notification.

A payment voucher corresponding to the payment is obtained.

The payment voucher is transmitted to the processing server.

In an optional embodiment, the payment voucher transmitting module 310, which is configured to perform the payment for the payment order according to the payment pulling-up notification, may be configured to perform following steps.

A corresponding payment page is displayed according to the payment entry.

A payment request for the payment order is transmitted to a payment channel server, in response to an input operation for payment verification performed by a user on the payment page.

In an optional embodiment, the payment order is represented by an item ID corresponding to the transaction price of the merchant order. The transaction price corresponds to multiple item IDs that are sequentially used in turn, and the merchant order is identified by a unique merchant order number.

Figure 18 is another block diagram of a structure of a payment apparatus according to an embodiment of the present disclosure. Reference is made to both Figure 17 and Figure 18. The apparatus may further include an order status notification obtaining module 330.

The order status notification obtaining module 330 is configured to: obtain a notification transmitted by the processing server, which indicates that an order status of the matched merchant order is service-to-be-provided, after the processing server instructs the merchant device to provide the virtual value-added service corresponding to the matched merchant order; and obtain a notification transmitted by the processing server, which indicates that the order status of the matched merchant order is service-provided, after the virtual value-added service provided by the merchant device is obtained.

A user device is further provided according to an embodiment of the present disclosure. The user device may load the foregoing module, which is embodied as a program and applied to the processing server, to implement the payment method provided in embodiments of the present disclosure.

An optional hardware structure of the user device may be as shown in Figure 14. In an optional embodiment, the user device may include at least one memory and at least one processing chip. The memory stores a program, and the processing chip invokes the program to implement steps of the foregoing payment method performed by the user device.

A storage medium is further provided according to an embodiment of the present disclosure. The storage medium may store a program, where the program is executable by a processing chip to implement steps of the foregoing payment method performed by the user device.

In an optional embodiment, the program mainly implements following functions.

A payment pulling-up notification that is transmitted by a processing server and indicates at least a payment order is received. The payment order is bound with a merchant order generated by a merchant device, and the merchant order corresponds to a virtual value-added service that the user device requests to purchase.

A payment voucher corresponding to the payment order is transmitted to the processing server.

The virtual value-added service provided by the merchant device is obtained, after the processing server matches the merchant order that is bound with the payment order to the payment voucher and instructs the merchant device to provide the virtual value-added service corresponding to the matched merchant order.

In an optional embodiment, detailed and extended functions of the program may refer to the content of the aforementioned payment method.

A payment system is further provided according to an embodiment of the present disclosure. A structure of the payment system may be as shown in Figure. The payment system includes a user device, a merchant device, and a processing server. Functions implemented by the user device, the merchant device, and the processing server may refer to the foregoing description, and details are not described again herein.

The embodiments of the present disclosure are described in a progressive manner, and each embodiment places emphasis on the difference from other embodiments. Therefore, one embodiment can refer to other embodiments for the same or similar parts. Since apparatuses disclosed in the embodiments correspond to methods disclosed in the embodiments, the description of apparatuses is simple, and reference may be made to the relevant part of methods.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation should not be considered to depart from the scope of the present disclosure.

The steps of the method or algorithm described according to the embodiments disclosed herein can be implemented in forms of hardware, a software module executed by a processor or the combination of the both. The software module may be stored in a Random Access Memory (RAM), a memory, a Read-Only Memory (ROM), an electrically programmable ROM, an electrically erasable programmable ROM, a register, a hardware disk, a movable magnetic disk, CD-ROM or any other forms of storage medium well known in the art.

According to the description of the disclosed embodiments, those skilled in the art can implement or use the present disclosure. Various modifications made to these embodiments may be obvious to those skilled in the art, and the general principle defined herein may be implemented in other embodiments without departing from the spirit or scope of the present disclosure. Therefore, the present disclosure is not limited to the embodiments described herein but confirms to a broadest scope in accordance with principles and novel features disclosed in the present disclosure.

## Claims

1. A payment method, comprising:
determining, by a processing server, a payment order that is bound with a merchant order, wherein the merchant order is generated by a merchant device and corresponds to a virtual value-added service that a user device requests to purchase;
obtaining, by the processing server, a payment voucher for the payment order;
matching, by the processing server, the merchant order that is bound with the payment order, to the payment voucher; and
transmitting, by the processing server, a service providing notification to the merchant device according to the matched merchant order, wherein the service providing notification indicates providing the virtual value-added service for the user device.

2. The payment method according to claim 1, wherein determining, by the processing server, the payment order that is bound with the merchant order comprises:
transmitting, by the processing server, a payment pulling-up request of the user device to the merchant device, wherein the payment pulling-up request indicates at least the virtual value-added service that the user device requests to purchase;
obtaining, by the processing server, a payment-order generation request transmitted by the merchant device, wherein the payment-order generation request indicates at least the merchant order corresponding to the virtual value-added service; and
determining, by the processing server, the payment order that is bound with the merchant order, according to the payment-order generation request.

3. The payment method according to claim 1 or 2, wherein obtaining, by the processing server, the payment voucher for the payment order comprises:
transmitting, by the processing server, a payment pulling-up notification to the user device, according to the payment order; and
obtaining, by the processing server, the payment voucher corresponding to payment of the user device for the payment order.

4. The payment method according to claim 2, wherein determining, by the processing server, the payment order that is bound with the merchant order, according to the payment-order generation request comprises:
determining, by the processing server, a transaction price of the merchant order according to the payment-order generation request; and
determining, by the processing server, an item identifier, ID, corresponding to the transaction price, wherein the item ID is registered on a payment channel server; and
binding, by the processing server, the item ID with the merchant order.

5. The payment method according to claim 4, wherein:
the payment-order generation request at least comprises: a merchant order number that identifies the merchant order uniquely, and the transaction price of the merchant order;
determining, by the processing server, the transaction price of the merchant order according to the payment-order generation request comprises:
determining, by the processing server, the transaction price of the merchant order carried in the payment-order generation request; and
the binding, by the processing server, the item ID with the merchant order comprises:
binding, by the processing server, the item ID with the merchant order number.

6. The payment method according to claim 5, wherein matching, by the processing server, the merchant order that is bound with the payment order, to the payment voucher comprises:
in a case that a quantity of merchant orders bound with the item ID is one, matching, by the processing server, the merchant order uniquely bound with the item ID to the payment voucher; and
in a case that there are a plurality of merchant orders bound with the item ID,
transmitting, by the processing server, the plurality of merchant orders bound with the item ID to the user device, and
determining, by the processing server, a merchant order that is determined by the user device from the plurality of merchant order, as the matched merchant order;
wherein in a case that a quantity of times for which the user device requests to pull up payment of virtual value-added services under a same transaction price is greater than a quantity of pollable item IDs corresponding to such transaction price, the pollable item IDs are repeatedly used for binding with the merchant orders of such transaction price.

7. The payment method according to claim 6, wherein determining, by the processing server, the item ID corresponding to the transaction price comprises:
determining, by the processing server, the item ID from a plurality of item IDs corresponding to the transaction price, according to a current sequential number with which the user device uses the transaction price, wherein the plurality of item IDs corresponding to the transaction price are sequentially used in turn.

8. The payment method according to claim 6, further comprising:
marking, by the processing server, a status of the merchant order as not matched, after the item ID is bound with the merchant order;
marking, by the processing server, a status of the matched merchant order as matched; and
marking, by the processing server, a status of another merchant order as matched, after the merchant order bound with the payment order is matched to the payment voucher, in a case that there are a plurality of merchant orders bound with the item ID, wherein the another merchant order is bound with the item ID and is not matched to the payment voucher.

9. The payment method according to claim 1, further comprising:
determining settlement data according to the payment voucher; and
sharing a settlement amount with a merchant corresponding to the merchant device, based on a preset ratio;
wherein the settlement data comprises at least one of: a commodity identifier corresponding to the virtual value-added service, a transaction price of the merchant order, a transaction currency, the settlement amount, merchant identity information corresponding to the merchant device, user identity information corresponding to the user device, or a merchant order number of the merchant order.

10. A payment method, comprising:
generating, by a merchant device, a merchant order corresponding to a virtual value-added service that the user device requests to purchase;
transmitting, by the merchant device, a payment-order generation request to a processing server, wherein the payment-order generation request is configured to request the processing server to generate a payment order that is bound with the merchant order;
receiving, by the merchant device, a service providing notification transmitted by the processing server, wherein the service providing notification is transmitted by the processing server after the processing server obtains a payment voucher corresponding to the payment order and matches the merchant order bound with the payment order to the payment voucher; and
providing, by the merchant device, the virtual value-added service corresponding to the matched merchant order for the user device, according to the service providing notification.

11. The payment method according to claim 10, wherein generating, by the merchant device, the merchant order corresponding to the virtual value-added service that the user device requests to purchase comprises:
obtaining, by the merchant device, a payment pulling-up request of the user device, wherein the payment pulling-up request indicates at least the virtual value-added service that the user device requests to purchase; and
generating, by the merchant device, the merchant order corresponding to the virtual value-added service.

12. The payment method according to claim 11, wherein:
the merchant order at least comprises: a merchant order number that identifies the merchant order uniquely, and a transaction price of the merchant order; and
transmitting, by the merchant device, the payment-order generation request to the processing server comprises:
transmitting, by the merchant device, the payment-order generation request carrying at least the merchant order number and the transaction price to the processing server.

13. The payment method according to claim 12, wherein the payment order is represented by an item ID corresponding to the transaction price, and the transaction price corresponds to a plurality of item IDs that are sequentially used in turn.

14. The payment method according to claim 10, further comprising:
instructing, by the merchant device, the processing server to update an order status of the matched merchant order to be service-provided, after the virtual value-added service corresponding to the matched merchant order is provided for the user device.

15. A payment method, comprising:
obtaining, by the user device, a payment pulling-up notification that is transmitted by a processing server and indicates at least a payment order, wherein the payment order is bound with a merchant order generated by a merchant device, and the merchant order corresponds to a virtual value-added service that the user device requests to purchase;
transmitting, by the user device, a payment voucher corresponding to the payment order to the processing server; and
obtaining, by the user device, a virtual value-added service provided by the merchant device, wherein the virtual value-added service is provided by the merchant device after the processing server matches the merchant order bound with the payment order to the payment voucher and instructs the merchant device to provide the virtual value-added service corresponding to the matched merchant order.

16. The payment method according to claim 15, further comprising:
accessing, by the user device, a service page of a merchant through an application; and
transmitting, by the user device, a payment pulling-up request to the processing server, after detecting an activation operation performed on a payment pulling-up entry for the virtual value-added service on the service page, wherein the payment pulling-up request indicates at least the virtual value-added service.

17. A payment apparatus applied to a processing server, comprising:
a payment order determining module, configured to determine a payment order that is bound with a merchant order, wherein the merchant order is generated by a merchant device and corresponds to a virtual value-added service that a user device requests to purchase;
a payment voucher obtaining module, configured to obtain a payment voucher for the payment order;
a merchant order matching module, configured to match the merchant order that is bound with the payment order, to the payment voucher; and
a service providing notification module, configured to transmit a service providing notification to the merchant device, according to the matched merchant order, wherein the service providing notification indicates providing the virtual value-added service for the user device.

18. A processing server, comprising:
at least one memory, storing a program; and
at least one processing chip, configured to invoke the program to implement the payment method according to any one of claims 1 to 9.

19. A payment apparatus applied to a merchant device, comprising:
a merchant order generation module, configured to generate a merchant order corresponding to a virtual value-added service that the user device requests to purchase;
a payment-order generation request module, configured to transmit a payment-order generation request to a processing server, wherein the payment-order generation request is configured to request the processing server to generate a payment order that is bound with the merchant order;
a service providing notification receiving module, configured to receive a service providing notification, which is transmitted by the processing server after the processing server obtains a payment voucher corresponding to the payment order and matches the merchant order that is bound with the payment order to the payment voucher; and
a service providing module, configured to provide the virtual value-added service corresponding to the matched merchant order for the user device, according to the service providing notification.

20. A merchant device, comprising:
at least one memory, storing a program; and
at least one processing chip, configured to invoke the program to implement the payment method according to any one of claims 10 to 14.

21. A payment apparatus applied to a user device, comprising:
a payment pulling-up notification obtaining module, configured to obtain a payment pulling-up notification that is transmitted by a processing server and indicates at least a payment order, wherein the payment order is bound with a merchant order generated by a merchant device, and the merchant order corresponds to a virtual value-added service that the user device requests to purchase;
a payment voucher transmitting module, configured to transmit a payment voucher corresponding to the payment order to the processing server; and
a service obtaining module, configured to obtain a virtual value-added service, which is provided by the merchant device after the processing server matches the merchant order that is bound with the payment order to the payment voucher and instructs the merchant device to provide the virtual value-added service corresponding to the matched merchant order.

22. The user device, comprising:
at least one memory, storing a program; and
at least one processing chip, configured to invoke the program to implement the payment method according to claim 15 or 16.

23. A storage medium, storing a program executable by a processing chip, to implement the payment method according to any one of claims 1 to 16.

24. A payment system, comprising:
the processing server according to claim 18,
the merchant device according to claim 20, and
the user device according to claim 22.
